# EUROPEAN PATENT APPLICATION

(11) **EP 0 935 100 A2**
(43) Date of publication of application: **11.08.1999**
(21) Application number: 98830424.2
(22) Date of filing: 15.07.1998
(51) Int. Cl.: F24D 19/00

(54) **Device for increasing the heating effect of a radiator of a building hot-water heating installation**

(30) Priority: 04.02.1998 IT TO980087
(71) Applicant: Lemp S.r.L., 10139 Torino (IT)
(72) Inventor: Piani, Giorgio, 10139 Torino (IT)
(74) Representative: Notaro, Giancarlo

(57) **Abstract**

A device is described which increases the heating effect of a radiator of a building hot-water heating installation with no need to modify the installation. The device comprises an auxiliary air directing unit (2), separate from the radiator and adapted to be positioned below the latter. The auxiliary unit (2) includes a hollow body having a fan (11) which draws air from an inlet aperture (9) and forces this air to come out through one or more outlet holes (6) vertically upwardly towards the radiator (1), so that the hot air flow generated thereby causes an additional heat exchange by air convection.

## Description

The present invention relates to radiators for building hot-water heating installations or the like.

The radiators used in installations of this type are adapted to heat the air of the ambient where they are located substantially by radiation.

The object of the present invention is that of providing a device which is able to increase the heat exchange between the radiator and the air of the ambient where the radiator is located, so as to obtain an increase of the heating effect.

A further object of the invention is that of providing a device of the above indicated type which has a relatively simple and inexpensive structure.

In view of achieving these and further objects, the invention provides a device able to increase the heating effect of a radiator for a building hot-water heating installation or the like, characterized in that said device comprises an air directing unit completely separate from the radiator, which is to be positioned below the radiator, said unit including a hollow body having an inlet aperture and at least one outlet aperture and a fan associated with said body for drawing air through said inlet aperture and directing this air towards said radiator through said at least one outlet aperture, so that the air flow coming out of said air directing unit is heated by the radiator and causes an additional heat exchange by air convection.

In a preferred embodiment, said auxiliary unit is provided for being positioned on a floor below the radiator and has an elongated shape so as to cover a substantial portion of the main horizontal dimension of the radiator. In this embodiment, the inlet aperture of the air directing unit is provided at one end of the hollow body, said body further having a number of in-line upper outlet apertures for the air which are arranged throughout the whole extension of the elongated hollow body, so as to direct air coming out of the air directing unit vertically upwardly towards the radiator.

Due to the above indicated features, the heating effect of the radiator is greatly increased, with no intervention on the hot-water heating plant of which the radiator is a part.

The fan provided on the auxiliary unit may be driven by an electric motor of any type.

Preferably, at the inlet aperture of the body of the air directing unit an air filter is provided.

Naturally, it is also possible to provide said hollow body with a structure such as to be adjustable in length, or constituted by a number of modules which can be connected to each other, so as to be adapted to the specific size of the radiator.

It is to be noted that the Applicant is aware that home heaters are already known, comprising a duct, typically in form of a serpentine, through which hot water flows, and an electrically driven fan to direct air on the outside of said duct, so that the air is heated and on its turn heats the ambient by convection. However, these devices are relatively complicated and costly and of course are manufactured from the beginning with the above described structure. The aim of the present invention is instead to provide a simple, inexpensive and portable device which can be adapted on radiators of the most conventional type in order to transform the radiator from a simple hot body which heats the ambient air by radiation to a air-convection heater. The device can be easily and immediately adapted by the user below the radiator and can also be easily moved from one room to another depending upon the user's specific needs.

Further features and advantages of the invention will become apparent from the description which follows with reference to the annexed drawings, given purely by way of non limiting example, in which:
figure **1** is a diagrammatic perspective view of a radiator of a building heating installation, provided with a device according to the invention,
figure **2** is a front view partially in cross-section of the arrangement of figure 1, and
figure **3** is an end view, also partially in cross-section, of the arrangement of figure 1.

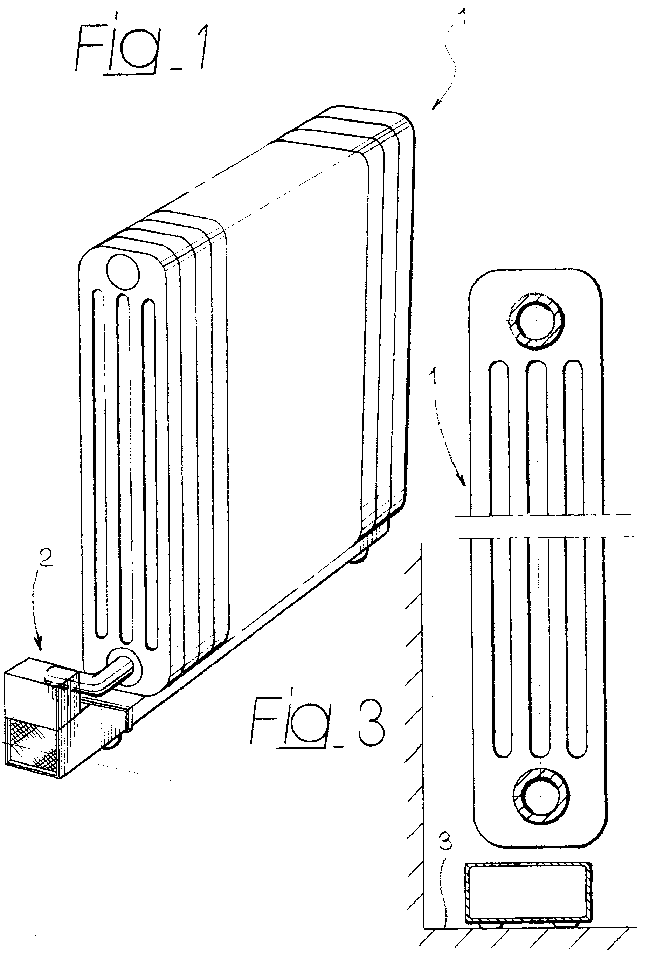

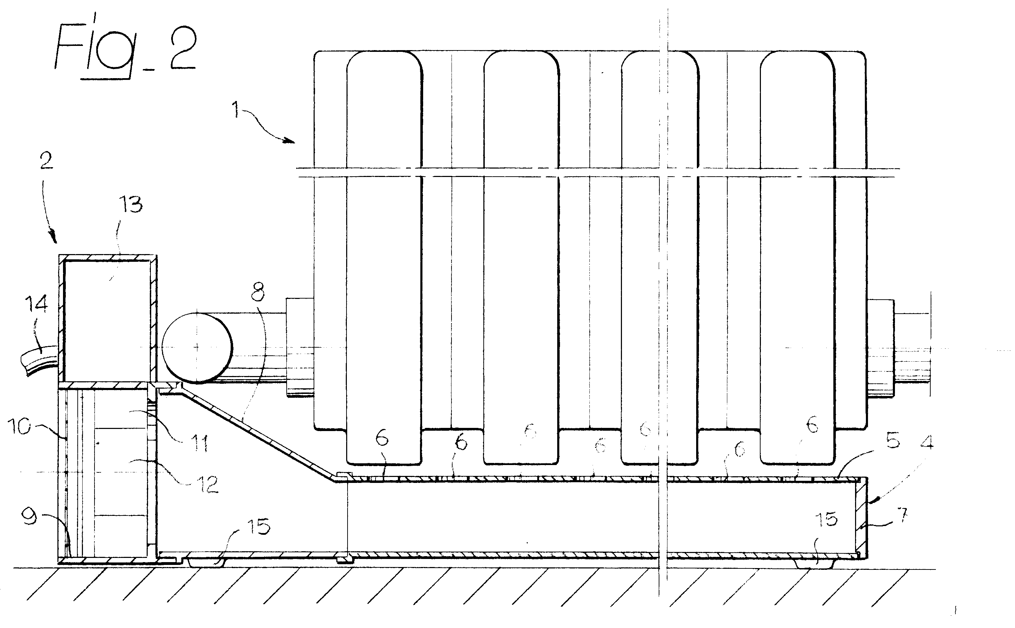

With reference to the drawings, numeral 1 generally designates a radiator or heating body of a building hot-water heating installation. The details of construction of this radiator are not described herein, since it can be made in any known way and also because the structure of the radiator, taken alone, does not fall within the scope of the invention. Typically, the radiator is constituted by a hollow metal body defining a passage for circulation of hot water which flows through the heating installation. It is also clearly apparent that the features of the heating installation of which the radiator 1 is a part may be of any type.

According to the conventional art, the heating body 1 causes a heating of the ambient in which it is located substantially by radiation.

In order to greatly increase the heat exchange, the invention provides a device constituted by an air directing unit 2, completely separate from the radiator, which is located on the floor 3 below the radiator 1, as shown in the drawings.

In the preferred embodiment which is shown herein, the auxiliary unit 2 is in form of a relatively light unit, of very reduced dimension and portable, which is therefore adapted to be easily moved from one room to the other in a dwelling, according to the needs of the user.

In the above mentioned embodiment, the auxiliary unit 2 has an elongated hollow body 4, which in the illustrated example has a rectangular cross-section, having an upper wall 5 with a number of in-line apertures 6 of any shape, such as circular holes, defining outlet apertures for the air flow generated by the air directing unit 2 and directed towards the radiator 1. The elongated body 4 is closed at one end by a covering plate 7. According to a further feature, the covering plate 7 is removably connected to the body 4 so that body 4 can be extended, if desired, by connection to an extending body by connecting means of any type, or also simply by a force fit. The possibility of adjusting the length of body 4 enables the auxiliary unit 2 to be adapted easily and rapidly so as to cover a substantial part of the horizontal main dimension of the radiator.

At the opposite end of the covering plate 7, the hollow body 4 has a tapering conduit which extends from an enlarged inlet mouth 9. At the inlet mouth 9 there is provided a filtering net 10 along with a drawing fan 11 which is associated to an actuating electric motor 12. This motor can be of any type and is provided with a control unit 13 which may have a control panel, including for instance one on/off button for activation and deactivation of the fan and also a knob for adjusting the motor speed. Again, the details of construction of the fan 11, the electric motor 12, the control unit 13 are not shown herein, since they can be provided in any known way. Reference numeral 4 designates the electric cable for supply to the unit 13 controlling the electric motor 12 driving the fan.

The body 4 is provided at its bottom with feet 15 for resting on the floor. However, it is clearly apparent that the shape and the structure of body 4 can be completely different from those shown in the drawings by way of example.

The provision of the air directing unit according to the invention in the above described way has various advantages. First of all, as already indicated, the device according to the invention greatly increases the heating effect of the radiator, with no intervention on the heating plant in which the radiator is used. Secondly, the device according to the invention is constituted by a separate unit which has a simple, light and inexpensive structure, which can be easily carried by one room to the other in a dwelling.

Since the device according to the invention is provided for being positioned on the floor, below the radiator, rather than, for example, above the radiator, the device may have a standardized structure, which can be adapted to any configuration of radiator, the only condition necessary for its use being the presence of a gap between the floor and the radiator sufficient for location of the air directing unit.

Naturally, the device according to the invention is particularly adapted to be used with a radiator of a building heating installation, but is also obviously adapted to be used in general in association with a heating body of any type (such as an oven), provided that between the lower wall of the heating body and the floor there is a gap sufficient for the location of the device.

At any rate it is very important, for understanding the present invention, to note that the device according to the invention is not integrated in any way in the structure of the heating body and forms a completely separate unit which is adapted on installations of conventional type, which are not provided at the origin with any means for generating a heat exchange by air convection.

Naturally, while the principle of the invention remains the same, the details of construction and the embodiments may widely vary with respect to what has been described and illustrated purely by way of example, without departing from the scope of the present invention.

## Claims

1. Device for increasing the heating effect of a radiator (1) of a building hot-water heating installation or the like, comprising an auxiliary air directing unit (2), completely separate from the radiator, which is to be positioned below the radiator (1), said unit (2) including a hollow body (4) having one inlet aperture (9) and at least one outlet aperture (6) and a fan (11) associated with said hollow body (4) to draw air through said inlet aperture (9) and to direct this air towards said radiator (1) through said at least one outlet aperture (6) so that the air flow coming out of said air directing unit (2) is heated by the radiator and causes an additional heat exchange by air convection.

2. Device according to claim 1, characterized in that said separate air directing unit (2) is provided to be placed on the floor below the radiator (1), and said hollow body (4) has an elongated shape, extending through a substantial part of the horizontal main dimension of the radiator.

3. Device according to claim 2, characterized in that said elongated hollow body (4) has an upper wall (5) having a number of outlet holes (6) distributed throughout the whole length of said hollow body (4).

4. Device according to claim 3, characterized in that said elongated hollow body (4) has a tapered air directing section (8) at one end extending from said inlet aperture (9).

5. Device according to claim 1, characterized in that said fan (11) is driven by an electric motor (12).

6. Device according to claim 5, characterized in that said fan (11), the associated driving electric motor (12) and a control unit (13) therefore are all carried by the structure of said body (4).

7. Device according to claim 3, characterized in that said elongated body (4) has a covering end plate (7) which is removable and is adapted to be connected to one or more extending bodies to provide auxiliary units of different lengths.

8. Device according to claim 3, characterized in that said hollow body (4) has a structure which is adjustable in length.
